# EUROPEAN PATENT SPECIFICATION

(11) **EP 2 190 223 B1**
(45) Date of publication and mention of the grant of the patent: **13.11.2013**
(21) Application number: 08800957.6
(22) Date of filing: 23.09.2008
(51) Int. Cl.: H04W 4/00

(54) **METHOD, APPARATUS AND SYSTEM FOR FORWARDING A CALL TO AN INTERNATIONAL NUMBER**
VERFAHREN, VORRICHTUNG UND SYSTEM ZUR WEITERLEITUNG EINES ANRUFS AN EINE INTERNATIONALE NUMMER
PROCÉDÉ, APPAREIL ET SYSTÈME D'ACHEMINEMENT D'UN APPEL VERS UN NUMÉRO INTERNATIONAL

(30) Priority: 30.09.2007 CN 200710151386
(43) Date of publication of application: 26.05.2010
(73) Proprietor: Huawei Technologies Co., Ltd., Longgang District, Shenzhen Guangdong 518129 (CN)
(72) Inventor: XIE, Jianping, Guangdong 518129 (CN); LI, Deqiang, Guangdong 518129 (CN); YU, Qian, Guangdong 518129 (CN)
(74) Representative: Körber, Martin Hans
(86) International application number: PCT/CN2008/072468
(87) International publication number: WO 2009/046659

(56) References cited:
- CN-A- 1 452 376
- CN-A- 101 098 558
- CN-A- 101 136 969
- KR-A- 20040 103 258
- US-B1- 6 295 447
- US-B1- 6 996 396

## Description

### FIELD OF THE INVENTION

The present invention relates to technology of mobile communication, and more particularly, to a method, device and system for forwarding a call to an international number.

### BACKGROUND

With the progress of globalization, it is often required for a mobile terminal to roam from one country to another, and even between different continents. As a result, service providers are required to provide international communication services.

In a mobile network, the function of forwarding, such as Call Forwarding-Unconditional (CFU), Call Forwarding-Busy (CFB), Call Forwarding-No Answer (CFNA) and the like, may be configured by a mobile user using his/her handset. However, a user can normally configure only a local number or a native number as a redirection number. For example, if user A is roaming internationally and the international roaming function is not activated, other users can not put through the original number of user A.

In the prior art, when a called user configures conditional forwarding, the call is forwarded from an end office to an international gateway, and then forwarded to the home international network of the redirection number. Here, the call forwarding is one of the most-frequently used services in the current mobile communication services. A destination telephone number to forward to is preconfigured by the called user. When the called user is called, the system forwards the call to the configured redirection international number. If the user is in a foreign country, international forwarding service has to be activated. However, if a service provider is to provide the international forwarding service, the core network of the communication network has to be modified. Meanwhile, international call charge at the international gateway and call forwarding charge are involved in the international forwarding service, which means the computation of call charges is very complicated. Furthermore, in practical applications, some information of incoming signaling in the redirection international gateway, such as the original called number, may be lost, which makes the incoming signaling incompatible to charge requirement of the international gateway.
According to the prior art, if the original called number in the incoming signaling forwarded to the international gateway is lost, it is impossible for the service provider to charge the original called user whose call is forwarded. Instead, the forwarded international call may be charged on the calling user, which is obviously unreasonable. Furthermore, the international gateway usually has a strict requirement on the format of incoming signaling, which imposes high requirement on the core network of the country. Sometimes the core network even has to be updated such that incoming signaling may be sent in the required format to the international gateway. Thus, the cost for such a service is high.
US 6,295,447 B1 discloses a method and system for enabling the control of execution of features in a telecommunications network, and specifically discloses a method and system that enables a subscriber and/or operator to specify one or more conditions under which a given feature such as a supplementary service (SS) is to be executed. When a call event occurs, the relevant telecommunications network evaluates a logical expression that includes variables corresponding to the specified conditions. If (i) the specified conditions are such that the logical expression for the given feature is "TRUE" and (ii) the feature is "ON", then the network executes the given feature and may further perform a specified task related to the executed feature.... The method and system is applicable to, for example, the call forwarding, call waiting, multi-party calling, and call barring features. The conditions may include, for example, time, usage, password, and calling party number.

### SUMMARY

The present invention provides a method, device and system for forwarding a call to an international number in order to solve, with number modification, the problem that the called user can be connected to a preconfigured redirection number.
To this end, one embodiment of the present invention provides a method for forwarding a call to an international number, wherein the international number has international roaming function, including:
receiving a trigger request sent by an end office; and
connecting the call to a preconfigured redirection international number if it is determined that a called user has activated redirection international number service according to the trigger request.
wherein connecting the call to a preconfigured redirection international number comprises:
   determining whether unconditional forwarding number service is activated by the called user; obtaining a redirection number of unconditional forwarding preconfigured by the called user, if the unconditional forwarding number service is activated; and
   determining priorities of the redirection international number and the redirection number of unconditional forwarding and connecting the call to the number having a higher priority according to the determination result, wherein the priorities of the called user forwarding configured in a Service Control Point, SCP and the called user unconditional forwarding configured in a Home Location Register, HLR;
   wherein connecting the call to the number having a higher priority according to the determination result comprises:
      issuing the Connect message if it is determined that the redirection international number has a higher priority, wherein the Destination address of the call carried in the Connect message is changed to the redirection international number preconfigured by the called user; and
      issuing a Continue message directly if it is determined that the redirection number of unconditional forwarding has a higher priority and connecting the call directly to the redirection number of unconditional forwarding preconfigured by the called user; the method further comprising: obtaining, by the end office, a trigger condition of the called user, and sending the trigger request to the SCP;
         wherein obtaining the trigger condition of the called user comprises:
         requesting, by the end office, subscription information of the called user from the HLR, when the end office receives the call from a calling user to the called user;
         determining, by the HLR, whether the unconditional forwarding is configured by the called user;
         sending the subscription information of the called user and an unconditional forwarding indication to the end office if the unconditional forwarding is configured; and
         sending the subscription information of the called user to the end office if the unconditional forwarding is not configured;
         wherein sending the trigger request to the SCP comprises:
         sending the trigger request to the SCP if the end office receives the subscription information of the called user sent by the HLR; and
      sending the trigger request including the unconditional forwarding indication to the SCP if the end office receives the subscription information of the called user and unconditional forwarding indication sent by the HLR.

Accordingly, an embodiment of the present invention further provides a system for forwarding a call to a redirection international number including a Service Control Point (SCP), a Home Location Register, HLR, and a Service Switch Point (SSP), in which:
the SSP is adapted to request subscription information of a called user from the HLR when a call from a calling user to the called user is received, obtain the subscription information of the called user and send a trigger request to the SCP;
the HLR is adapted to determine whether the unconditional forwarding is configured by the called user when the request for the subscription information of the called user from the SSP is received, send the subscription information of the called user and the unconditional forwarding indication to the SSP if the unconditional forwarding is configured by the called user, and send the subscription information of the called user to the SSP if the unconditional forwarding is not configured by the called user;
the SCP is adapted to determine whether redirection international number service is activated by the called user after the trigger request sent by the SSP is received, and connect the call to a preconfigured redirection international number if the redirection international number service is activated, wherein the international number has international roaming function;
   wherein the SSP is further adapted to obtain an unconditional forwarding indication configured by the called user when obtaining subscription information of the called user, and send the trigger request to the SCP if the SSP receives the subscription information of the called user sent by the HLR, and send the trigger request including the unconditional forwarding indication to the SCP if the SSP receives the subscription information of the called user and unconditional forwarding indication sent by the HLR;
   wherein the SCP further comprises:
   a receiving unit, adapted to receive the trigger request sent by the SSP;
   a forwarding service determination unit, adapted to determine whether the called user has activated the redirection international number service according to the trigger request and send a determination result; and
   a redirection number connecting unit, adapted to connect the call to the preconfigured redirection international number if a determination result indicating that the called user has activated the redirection international number service is received from the forwarding service determination unit;an unconditional forwarding service determination unit, adapted to determine whether the called user has activated an unconditional redirection number service and send a determination result;
   an unconditional forwarding number obtaining unit, adapted to obtain from the HLR a redirection number of unconditional forwarding preconfigured by the called user when a positive determination result is received from the unconditional forwarding service determination unit;
   an unconditional forwarding number connecting unit, adapted to connect the call to the redirection number of unconditional forwarding according to the obtained redirection number of unconditional forwarding;
   a priority determination unit, adapted to determine priorities of the redirection international number and the redirection number of unconditional forwarding after the unconditional forwarding number obtaining unit obtains the redirection number of unconditional forwarding, and send a determination result indicating that the redirection international number has a higher priority to the redirection number connecting unit or send a determination result indicating that the redirection number of unconditional forwarding has a higher priority to the unconditional forwarding number connecting unit, wherein the priorities of the called user forwarding configured in the SCP and the called user unconditional forwarding configured in the HLR;
   the unconditional forwarding number connecting unit, further adapted to connect the call to the redirection number of unconditional forwarding when the determination result indicating that the redirection number of unconditional forwarding has a higher priority is received from the priority determination unit; and
   the redirection number connecting unit, further adapted to connect the call to redirection international number when the determination result indicating that the redirection international number has a higher priority is received from the priority determination unit, wherein the Destination address of the call carried in the Connect message is changed to the redirection international number preconfigured by the called user.

According to the embodiments of the present invention, it is determined in the called procedure for the called user whether the called user has activated the redirection international number service. If the redirection international number service is activated, the call is connected to the preconfigured redirection international number. That is, the function of forwarding to international number is realized with the number-modification function of the SCP without modifying the international gateway.

### BRIEF DESCRIPTION OF THE DRAWINGS

Figure 1 is a flow chart of a method for forwarding a call to an international number according to an embodiment of the present invention;
Figure 2 is a flow chart of the first embodiment of the method for forwarding a call to an international number shown in Fig. 1;
Figure 3 is a flow chart of the second embodiment of the method for forwarding a call to an international number shown in Fig. 1;
Figure 4 is a flow chart of managing redirection numbers using USSD method according to an embodiment of the present invention;
Figure 5 is a flow chart of managing redirection numbers using IVR method according to an embodiment of the present invention; and
Figure 6 is a block diagram of a device for forwarding a call to an international number according to an embodiment of the present invention.

### DETAILED DESCRIPTION

In the following, the present invention will be described in detail with reference to the drawings and embodiments.

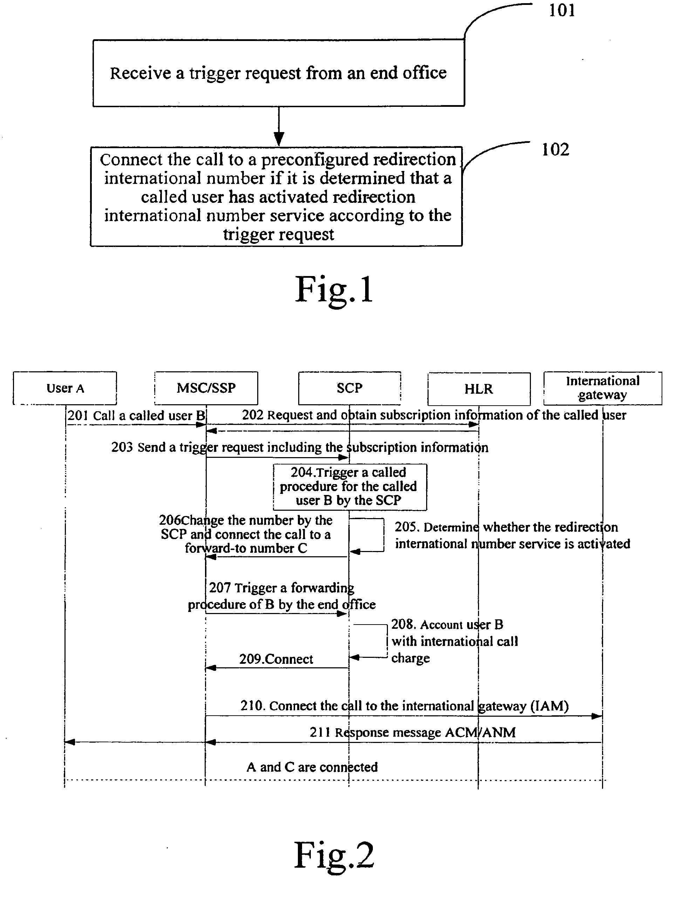

Please refer to Fig. 1, which illustrates a flow chart of a method for forwarding a call to an international number according to an embodiment of the present invention. The method includes:
Block 101: receiving a trigger request sent from an end office;
Block 102: connecting the call to the preconfigured redirection international number if it is determined according to the trigger request that a redirection international number service has been activated by the called user.

When the call is forwarded, a Service Control Point (SCP) receives the trigger request sent by the end office and triggers a normal called procedure for the called user (i.e. the procedure of connecting the call to the preconfigured redirection international number).

Before sending the trigger request, the end office requests subscription information of the called user from the Home Location Register (HLR), when a call request of a calling user originating a call to a called user is received. The HLR determines whether unconditional forwarding is configured by the called user. If unconditional forwarding is configured by the called user, the subscription information of the called user and a configured unconditional forwarding indication is sent to the end office. If unconditional forwarding is not configured, the subscription information of the called user is sent to the end office.

If the unconditional forwarding indication preconfigured by the called user is included in the trigger request sent by the end office and received by the SCP, the SCP determines whether unconditional forwarding service is activated by the called user. If the unconditional forwarding service is activated by the called user, after the redirection number of unconditional forwarding of the called user is obtained, the unconditional forwarding called procedure or normal called procedure for the called user is triggered, by comparing priorities of the redirection international number and the redirection number of unconditional forwarding.

During the unconditional forwarding called procedure, the priorities of the redirection international number configured by the called user and the redirection number of unconditional forwarding are determined. If the redirection international number has a higher priority, a Connect message is issued, in which the redirection international number preconfigured by the called user is filled as the Destination Address of the call. If the redirection number of unconditional forwarding has a higher priority, a Connect signaling message is issued directly and the call is connected directly to the redirection international number preconfigured by the called user.

In the normal called procedure, after it is determined that the called user has activated the redirection international number service, a Connect message is issued, in which the redirection international number preconfigured by the called user is filled as the Destination Address of the call.

In the following, detailed embodiments will be described such that those skilled in the art will better understand the present invention.

Please refer to Fig. 2, which is the first embodiment of the method for forwarding a call to an international number shown in Fig. 1. In this embodiment, the procedure of forwarding the call to the international number in the case that the called user has not configured unconditional forwarding will be described. Specifically:
Step 201: User A originates a call to a mobile user B and the call is processed by the Mobile Switching Center (MSC)/Service Switch Point (SSP) at the end office.
Step 202: The MSC/SSP at the end office sends a request for subscription information of the called user to the HLR. After the request is received by the HLR, if it is determined that unconditional forwarding is not configured by the called user B, the subscription information of the called user B is sent by the HLR to the MSC/SSP.
Step 203: The MSC/SSP at the end office sends a trigger request to the SCP.
Step 204: Upon receiving the trigger request, the SCP triggers a called procedure for the called user B.
Step 205: The SCP determines whether redirection international number service is activated by user B.

Namely, a flag indicating whether international number service is activated is configured in the SCP for the called user B in advance, and the flag is used to determine whether redirection international number service is activated by the called user B. For example, it indicates that the redirection international number service is not activated by the called user B if the flag is 0; and it indicates that the redirection international number service is activated by the called user B if the flag is 1.
Step 206: If the redirection international number service is activated by the called user B, the SCP modifies the number and connects the call to the redirection number C. Namely, if the redirection international number is activated, a Connect message is sent to the end office and the redirection international number C preconfigured by the called user B is filled as the Destination address. If the redirection international number is not activated, the call is connected to the number of the called user B directly (not shown).
Step 207: The MSC/SSP triggers the forwarding procedure for the called user. That is, upon receiving the Connect message with modified number, the MSC/SSP finds that an oCSIApplicable parameter is included in the Connect message or that the number is modified by the SCPThat is, the Destination address number in the Connect signaling is different from the callednumber submitted by the Initial detection point (IDP). In this case, a Mobile Forwarding (MF) for the called user is triggered.
Step 208: In the MF, the SCP determines whether the balance of the called user B meets the condition of the call. If it does not meet the condition, the call is terminated. If it meets the condition, the called user B is charged, that is, the charge for the international call between the home country of the called user B and the home country of the redirection international number C is calculated.
Step 209: The SCP issues a Connect message to the end office.
Step 210: The MSC/SSP sends an initial address message (IAM) to the international gateway and connects the call to the international gateway. The international gateway then connects the call to the home country of the redirection international number C.
Step 211: The international gateway sends an Address Complete Message (ACM)/Answer Message (ANM) to the calling user A through the end office, and user A is connected with C.

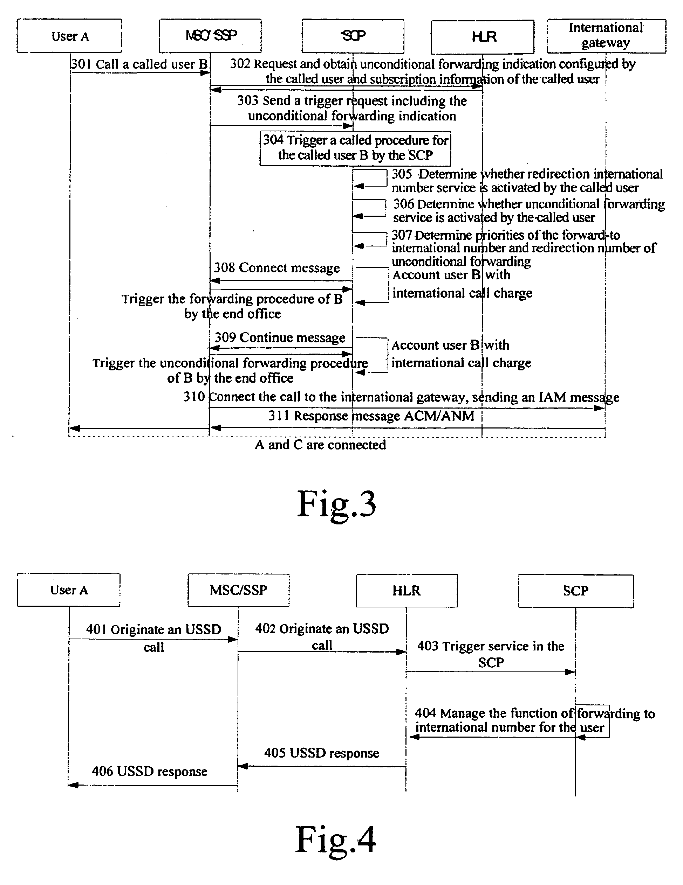

Please refer to Fig. 3, which is a second embodiment of the method for forwarding a call to an international number shown in Fig. 1. In this embodiment, the procedure of forwarding the call to a redirection number of unconditional forwarding in the case that the called user has configured unconditional forwarding is described. Specifically:
Step 301: User A originates a call to called user B and the call is processed by an MSC/ SSP at the end office.
Step 302: The MSC/SSP at the end office sends a request for subscription information of the called user to the HLR. After the request is received by the HLR, if it is determined that unconditional forwarding is configured by the called user B, the subscription information of the called user and preconfigured unconditional forwarding indication is sent by the HLR to the MSC/SSP at the end office.
Step 303: The MSC/SSP at the end office sends a trigger request including the unconditional forwarding indication to the SCP.
Step 304: After receiving the trigger request, the SCP triggers a called procedure for the called user B.
Step 305: The SCP determines whether the redirection international number service is activated by the called user B. If the redirection international number service is activated by the called user B, step 306 is executed; otherwise, the call is directly connected to the number of the called user B.

Namely, a flag indicating whether redirection international number service is activated is configured for the called user B in the SCP in advance, and the flag is used to determine whether the redirection international number service is activated by the called user B. For example, it indicates that the redirection international number service is not activated by the called user B if the flag is 0; and it indicates that the redirection international number service is activated by the called user B if the flag is 1.
Step 306: If the unconditional forwarding indication is included in the trigger request, the SCP determines whether the unconditional forwarding service is activated by the called user B. If the unconditional forwarding service is activated by the called user B, the redirection number of unconditional forwarding preconfigured by the called user is obtained from the HLR (not shown). After that, step 307 is executed. If the unconditional forwarding service is not activated by the called user B, the call is connected to the number of the called user B directly (not shown).
Step 307: The SCP determines priorities of the redirection international number and the redirection number of unconditional forwarding, that is, the priorities of the called user forwarding configured in the SCP (referred to as SCP forwarding in short) and the called user unconditional forwarding configured in the HLR (referred to as HLR forwarding in short). Specifically, a flag bit is added in the attribute definition of the called user B. If the flag bit is 0, it indicates that the SCP forwarding has a higher priority, and step 308 is executed. If the flag bit is 1, it indicates that the HLR forwarding has a higher priority, and step 309 is executed.

Alternatively, a forwarding priority determination flag bit is first defined in attributes of the called user B. If the flat bit is 0, the SCP forwarding has a higher priority and step 307 is executed. If the flag bit is 1, the HLR forwarding has a higher priority and step 308 is executed. However, configuration of priorities of the forwarding is not limited to what is described in the embodiment.
Step 308: If the SCP forwarding has a higher priority, the SCP issues a Connect message, in which the Destination address is filled with a redirection international number C preconfigured by user B. When the MSC/SSP at the end office receives the Connect message with the modified number, the MSC/SSP finds that an oCSIApplicable parameter is included in the Connect message or that the number is modified by the SCP (i.e., the Destination address number in the Connect signaling is different from the called number submitted by IDP), in this case MF for the called user B is triggered.

The SCP sends to the end office a Connect message, in which the Destination number is changed to the redirection international number C preconfigured by the called user B. The end office finds that the Destination number is changed by the SCP and triggers the MF for the called user. Moreover, it is determined in the MF whether the balance of the called user B is enough. If the balance is low, the call is terminated. If the balance is enough, the called user B is charged, that is, the charge for the international call between the home country of the called user B and the home country of the redirection international number C is calculated. Then step 309 is executed.
Step 309: If the HLR forwarding has a higher priority, the SCP directly issues a Continue message and the end office triggers the MF of unconditional forwarding of user B. In this case, the redirection number is generally a native number.

Namely, the SCP sends a Continue message to the end office. The MSC/SSP at the end office triggers the MF of unconditional forwarding for the called user B. Moreover, it is determined in the MF whether the balance of the called user B is enough. If the balance is low, the call is stopped. If the balance is enough, toll charge for the call between the home location of the called user B and the home location of the unconditional redirection number C or the visited location is calculated. Then step 310 is executed.
Step 310: The MSC/SSP at the end office sends an IAM and connects the call to the international gateway. The international gateway then connects the call to the redirection number C of unconditional forwarding.
Step 311: The international gateway sends an ACM/ANM to the calling user A, and user A is connected with C.

When implementing the above embodiment, the called user should configure the redirection number beforehand, which may be realized with the following methods: Unstructured Supplementary Services Data (USSD) method or Interactive Voice Response (IVR) method. The detailed implementation procedure is described in the following, but it is not limited to the disclosed methods, and other methods may be used as well.

Please refer to Fig. 4, which is a flow chart of managing redirection numbers using the USSD method according to an embodiment of the present invention. Specifically:
Step 401: User A originates an USSD call to an MSC/SSP. For example, user A dials '*120*3#', the last digit may be used to determine whether international forwarding number service is activated by the user. Namely, different values of the last digit may have different meanings. For example, '*120*1#' indicates the subscription of the service of forwarding to an international number; `*120*2#' indicates the canceling of the service of forwarding to an international number; and `*120*3*MSISDN/PSTN#' indicates configuring MSISDN/PSTN as the redirection number.
Step 402: The MSC/SSP forwards the USSD call to the HLR of user A.
Step 403: The HLR connects the USSD call to the SCP of user A according to an USSD service code (such as '120'), and then triggers the service in the SCP.
Step 404: The SCP performs the function of managing the redirection international number of the user according to the USSD call, such as activating the service of forwarding to international number, cancelling the international number service, adding and modifying the forwarding number service and/or obtaining help information for the forwarding number service, and then returns the execution result to the HLR.
Step 405: The HLR returns an USSD reply message to the MSC/SSP.
Step 406: The MSC/SSP informs user A of the configuration status of the redirection number in the SCP.

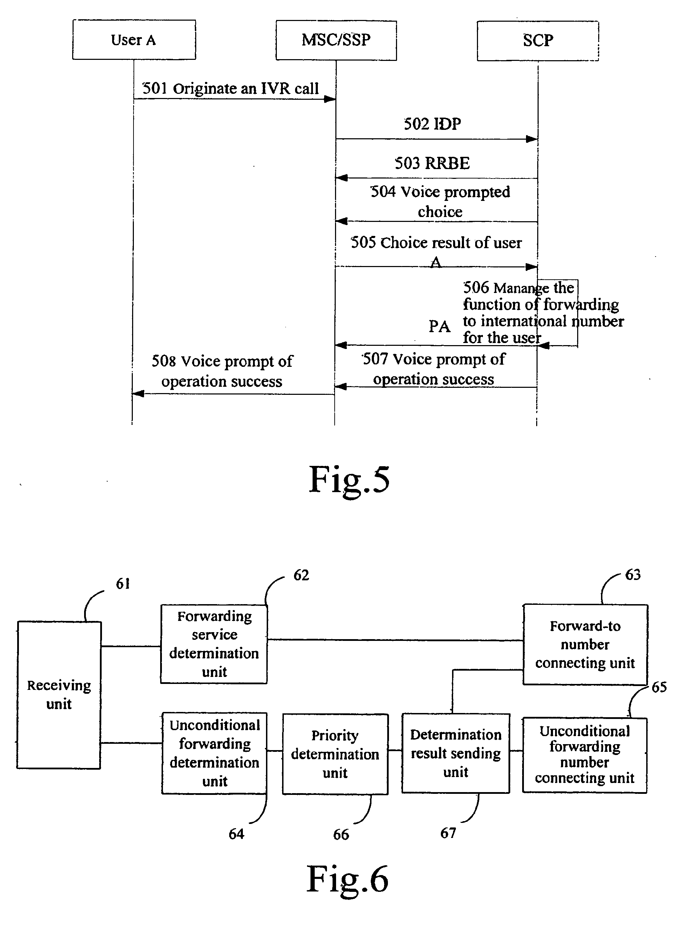

Please refer also to Fig. 5, which is a flow chart of managing redirection numbers using the IVR method according to an embodiment of the present invention. Specifically:
Step 501: User A originates an IVR managing procedure call to an MSC/SSP.
Step 502: The MSC/SSP sends an IDP message to the SCP according to a number range or subscription information of user A, such that a calling procedure is triggered.
Step 503: The SCP sends a Request report BCSM event (RRBE) message to the MSC/SSP to monitor IDP in the SSP.
Step 504: The SCP sends to the MSC/SSP a voice prompt (PC), which may be: welcome to the redirection international number service, to activate the service press 1, to configure a redirection number press 2, to cancel the redirection international number service press 3, for help information press 4, and the like.
Step 505: The MSC/SSP forwards the choice made by user A (i.e., PC-Result) to the SCP.
Step 506: The SCP performs a corresponding operation or different service property according to the choice of user A, that is, to manage the international forwarding number service of the user and feedback the responded operation (i.e., a PA) to the MSC/SSP.
Step 507: After finishing the corresponding operation, the SCP sends a voice prompt of operation success (i.e., Release Call) to the MSC/SSP.
Step 508: The MSC/SSP returns a voice prompt of operation success to user A.

Accordingly, an embodiment of the present invention further provides a device for forwarding a call to an international number, the block diagram of which is shown in Fig. 6. The device for forwarding a call to an international number may also be integrated in the SCP, though it is not limited to that. The device includes a receiving unit 61, a forwarding service determination unit 62 and a redirection number connecting unit 63. The receiving unit 61 is adapted to receive a trigger request including subscription information sent by an end office; the forwarding service determination unit 62 is adapted to determine whether a called user has activated the redirection international number service, according to the trigger request, and send a determination result; the redirection number connecting unit 63 is adapted to connect a call to a preconfigured redirection international number if a determination result is received from the forwarding service determination unit indicating that the called user has activated the redirection international number service.

Furthermore, the device for forwarding a call to a redirection international number further includes: an unconditional forwarding service determination unit 64, adapted to determine whether the called user has activated the redirection international number service, when the redirection number of unconditional forwarding in the trigger request is received, and send a determination result; an unconditional redirection number connecting unit, adapted to connect the call to the preconfigured redirection number of unconditional forwarding, according to a positive determination result from the unconditional forwarding service determination unit.

The device further includes a priority determination unit 66, adapted to determine priorities of the SCP forwarding and the HLR forwarding, after the unconditional forwarding number determination unit determines that the redirection international number service is activated; a determination result sending unit 67, adapted to send a determination result indicating that the SCP forwarding has a higher priority to a redirection number connecting unit and the determination result indicating that the HLR forwarding has a higher priority to the unconditional forwarding number connecting unit, according to the determination result of the priority determination unit.

The detailed procedure for MF using the device for forwarding a call to an international number is as follows:
The receiving unit 61 receives the trigger request including the subscription information of the called user from the end office and triggers the called procedure for the called user according to the trigger request. In the called procedure, the forwarding service determination unit 62 determines whether the called user has activated the redirection international number service, according to the trigger request, and then sends the determination result to the redirection number connecting unit 63. The redirection number connecting unit 63 receives the determination result and connects the call to the preconfigured redirection international number. If the trigger request received by the receiving unit 61 from the end office includes the redirection number of unconditional forwarding, the unconditional forwarding called procedure for the called user is triggered. In the unconditional forwarding called procedure, the unconditional forwarding service determination unit 64 determines whether the called user has activated the redirection international number service. When it determines that the redirection international number service is activated, the priority determination unit 66 determines priorities of the forwarding. If the SCP forwarding has a higher priority, the determination result sending unit 67 sends the determination result to the redirection number connecting unit. If the HLR forwarding has a higher priority, the determination result sending unit 67 sends the determination result to the unconditional forwarding number connecting unit 65. Thus, call forwarding for the called user is realized. It is seen that with the embodiment of the present invention the function of forwarding to an international number may be realized rapidly without modifying the international gateway. Furthermore, the service provider may rapidly deploy the international forwarding service by replacing the update of core network with the number-modifying function of the SCP.

Furthermore, according to an embodiment, the receiving unit is further adapted to receive the trigger request including the redirection number of unconditional forwarding of the called user sent by the end office. The device for forwarding a call to an international number further includes: an unconditional forwarding service determination unit, an unconditional forwarding number obtaining unit and an unconditional forwarding number connecting unit. It may further include a priority determination unit, in which:
the unconditional forwarding service determination unit is adapted to determine whether the called user has activated the unconditional redirection number service and send a determination result;
the unconditional forwarding number obtaining unit is adapted to obtain a redirection number of unconditional forwarding preconfigured by the called user when a determination result is received from the unconditional forwarding service determination unit;
the priority determination unit is adapted to determine priorities of the redirection international number and the redirection number of unconditional forwarding, and send a determination result indicating that the redirection international number has a higher priority to a redirection number connecting unit and a determination result indicating that the redirection number of unconditional forwarding has a higher priority to the unconditional forwarding number connecting unit;
the unconditional forwarding number connecting unit is adapted to connect the call to the preconfigured redirection number of unconditional forwarding, when the determination result indicating that the redirection number of unconditional forwarding has a higher priority is received from the priority determination unit;
the redirection number connecting unit is further adapted to connect the call to the preconfigured redirection international number, when the determination result indicating that the redirection international number has a higher priority is received from the priority determination unit.

Furthermore, an embodiment of the present invention further provides a system for forwarding a call to a redirection international number, which includes an SCP, an SSP and an HLR, where:
the SSP is adapted to request subscription information of a called user from the HLR when a calling user originating a call to the called user is received, to obtain the subscription information of the called user and send a trigger request to the SCP;
the SCP is adapted to determine whether redirection international number service is activated by the called user, after the trigger request sent by the SSP is received; if the redirection international number service is activated, to connect the call to a preconfigured redirection international number;
the HLR is adapted to determine whether unconditional forwarding is configured by the called user when the request for the subscription information of the called user from the SSP is received; if unconditional forwarding is configured by the called user, to send the subscription information of the called user and a configured unconditional forwarding indication to the SSP; otherwise, to send the subscription information of the called user to the SSP.

According to an embodiment, if the HLR sends the subscription information of the called user to the SSP, the SSP sends the trigger request to the SCP after the subscription information of the called user is received. The SCP includes:
a receiving unit, adapted to receive the trigger request sent by the SSP;
a forwarding service determination unit, adapted to determine whether the called user has activated the redirection international number service, according to the trigger request, and to send a determination result; and
a redirection number connecting unit, adapted to connect the call to the preconfigured redirection international number if a determination result indicating that the called user has activated the redirection international number service is received from the forwarding service determination unit.

According to another embodiment, if the HLR sends the subscription information of the called user and the configured unconditional forwarding indication to the SSP, then the SSP obtains the unconditional forwarding indication configured by the called user while obtaining the subscription information of the called user, and then sends the trigger request including the unconditional forwarding indication to the SCP. In this case, in addition to the receiving unit, the forwarding service determination unit and the redirection number connecting unit, the SCP further includes:
an unconditional forwarding service determination unit, adapted to determine whether the called user has activated unconditional forward number service and send a determination result;
an unconditional forwarding number obtaining unit, adapted to obtain from the HLR a redirection number of unconditional forwarding preconfigured by the called user when the determination result is received from the unconditional forwarding service determination unit; and
an unconditional forwarding number connecting unit, adapted to connect the call to the redirection number of unconditional forwarding, according to the obtained redirection number of unconditional forwarding.

The SCP may further include a priority determination unit, adapted to determine priorities of the redirection international number and the redirection number of unconditional forwarding, after the unconditional forwarding number obtaining unit obtains the redirection number of unconditional forwarding, and send a determination result indicating that the redirection international number has a higher priority to the redirection number connecting unit and a determination result indicating that the redirection number of unconditional forwarding has a higher priority to the unconditional forwarding number connecting unit;
the unconditional forwarding number connecting unit is further adapted to connect the call to the redirection number of unconditional forwarding, when the determination result indicating that the redirection number of unconditional forwarding has a higher priority is received from the priority determination unit;
the redirection number connecting unit is further adapted to connect the call to the redirection international number, when the determination result indicating that the redirection international number has a higher priority is received from the priority determination unit.

In the embodiment, the implementation of the function and operation of each unit in the system is the same as the corresponding procedure in the above method, the description of which will not be repeated here.

According to the embodiment, in the called procedure for the called user, it determines whether the called user has activated the redirection international number service. If the redirection international number service is activated, the call is connected to the preconfigured redirection international number. It may also determine whether the called user has unconditional forwarding activated. If the unconditional forwarding is activated, it determines the priorities of the redirection international number and the redirection number of unconditional forwarding, after obtaining the redirection number of unconditional forwarding, and then connects the call to the redirection number with the higher priority. Namely, with the embodiment of the present invention, the function for forwarding to the international number may be realized with the number-modifying function of the SCP without modifying the international gateway.

What are described above are only preferred embodiments of the disclosure. It should be noted that any modification, equivalent substitution and improvement made by those skilled in the art within the scope of the disclosure are intended to be included in the scope of the disclosure.

## Claims

1. A method for forwarding a call to an international number, wherein the international number has international roaming function, comprising:
receiving a trigger request sent by an end office, wherein if the trigger request includes an unconditional forwarding indication;
connecting the call to a preconfigured redirection international number if it is determined that a called user has activated redirection international number service according to the trigger request;
wherein connecting the call to a preconfigured redirection international number comprises:
determining whether unconditional forwarding number service is activated by the called user;
obtaining a redirection number of unconditional forwarding preconfigured by the called user, if the unconditional forwarding number service is activated; and
determining priorities of the redirection international number and the redirection number of unconditional forwarding and connecting the call to the number having a higher priority according to the determination result; wherein the priorities are of called user forwarding configured in a Service Control Point, SCP and of called user unconditional forwarding configured in a Home Location Register, HLR;
wherein connecting the call to the number having a higher priority according to the determination result comprises:
issuing a Connect message if it is determined that the redirection international number has a higher priority, wherein the Destination address of the call carried in the Connect message is changed to the redirection international number preconfigured by the called user; and
issuing a Continue message directly if it is determined that the redirection number of unconditional forwarding has a higher priority and connecting the call directly to the redirection number of unconditional forwarding preconfigured by the called user; the method further comprising:
obtaining, by the end office, a trigger condition of the called user, and sending the trigger request to the SCP;
wherein obtaining the trigger condition of the called user comprises:
requesting, by the end office, subscription information of the called user from the HLR, when the end office receives the call from a calling user to the called user;
determining, by the HLR, whether the unconditional forwarding is configured by the called user;
sending the subscription information of the called user and an unconditional forwarding indication to the end office if the unconditional forwarding is configured; and
sending the subscription information of the called user to the end office if the unconditional forwarding is not configured;
wherein sending the trigger request to the SCP comprises:
sending the trigger request to the SCP if the end office receives the subscription information of the called user sent by the HLR; and
sending the trigger request including the unconditional forwarding indication to the SCP if the end office receives the subscription information of the called user and unconditional forwarding indication sent by the HLR.

2. A system for forwarding a call to a redirection international number comprising a Service Control Point, SCP, a Home Location Register, HLR, and a Service Switch Point, SSP, wherein,
the SSP is adapted to request subscription information of a called user from the HLR, when a call from a calling user to the called user is received, and obtain the subscription information of the called user and send a trigger request to the SCP;
the HLR is adapted to determine whether the unconditional forwarding is configured by the called user when the request for the subscription information of the called user from the SSP is received, send the subscription information of the called user and the unconditional forwarding indication to the SSP if the unconditional forwarding is configured by the called user, and send the subscription information of the called user to the SSP if the unconditional forwarding is not configured by the called user; and
the SCP is adapted to determine whether redirection international number service is activated by the called user after the trigger request sent by the SSP is received, and connect the call to a preconfigured redirection international number if the redirection international number service is activated, wherein the international number has international roaming function;
wherein the SSP is further adapted to obtain an unconditional forwarding indication configured by the called user when obtaining subscription information of the called user, and send the trigger request to the SCP if the SSP receives the subscription information of the called user sent by the HLR, and send the trigger request including the unconditional forwarding indication to the SCP if the SSP receives the subscription information of the called user and unconditional forwarding indication sent by the HLR;
wherein the SCP further comprises:
a receiving unit, adapted to receive the trigger request sent by the SSP;
a forwarding service determination unit, adapted to determine whether the called user has activated the redirection international number service according to the trigger request and send a determination result; and
a redirection number connecting unit, adapted to connect the call to the preconfigured redirection international number if a determination result indicating that the called user has activated the redirection international number service is received from the forwarding service determination unit.
an unconditional forwarding service determination unit, adapted to determine whether the called user has activated an unconditional redirection number service and send a determination result;
an unconditional forwarding number obtaining unit, adapted to obtain from the HLR a redirection number of unconditional forwarding preconfigured by the called user when a positive determination result is received from the unconditional forwarding service determination unit;
an unconditional forwarding number connecting unit, adapted to connect the call to the redirection number of unconditional forwarding according to the obtained redirection number of unconditional forwarding;
a priority determination unit, adapted to determine priorities of the redirection international number and the redirection number of unconditional forwarding after the unconditional forwarding number obtaining unit obtains the redirection number of unconditional forwarding, and send a determination result indicating that the redirection international number has a higher priority to the redirection number connecting unit or send a determination result indicating that the redirection number of unconditional forwarding has a higher priority to the unconditional forwarding number connecting unit; wherein the priorities are of called user forwarding configured in the SCP and of called user unconditional forwarding configured in the HLR;
the unconditional forwarding number connecting unit, further adapted to connect the call to the redirection number of unconditional forwarding when the determination result indicating that the redirection number of unconditional forwarding has a higher priority is received from the priority determination unit; and
the redirection number connecting unit, further adapted to connect the call to redirection international number when the determination result indicating that the redirection international number has a higher priority is received from the priority determination unit , wherein the Destination address of the call carried in the Connect message is changed to the redirection international number preconfigured by the called user.

## Patentansprüche

1. Verfahren zum Weiterleiten eines Anrufs an eine internationale Nummer, wobei die internationale Nummer eine internationale Roaming-Funktion aufweist, umfassend:
Empfangen einer von einer Endstelle gesendeten Auslöseanforderung, wobei, falls die Auslöseanforderung eine Sofortweiterleitungsanzeige enthält;
Verbinden des Anrufs mit einer vorkonfigurierten internationalen Umleitungsnummer, falls bestimmt wird, dass ein angerufener Teilnehmer einen internationalen Nummerumleitungsdienst gemäß der Auslöseanforderung aktiviert hat;
wobei das Verbinden des Anrufs mit einer vorkonfigurierten internationalen Umleitungsnummer Folgendes umfasst:
Bestimmen, ob der Sofortweiterleitungsnummerdienst durch den angerufenen Teilnehmer aktiviert ist;
Erhalten einer Sofortweiterleitungs-Umleitungsnummer, durch den angerufenen Teilnehmer vorkonfiguriert, falls der Sofortweiterleitungsnummerdienst aktiviert ist; und
Bestimmen von Prioritäten der internationalen Umleitungsnummer und der Sofortweiterleitungs-Umleitungsnummer und Verbinden des Anrufs mit der Nummer mit einer höheren Priorität gemäß dem Bestimmungsergebnis; wobei die Prioritäten Angerufener-Teilnehmer-Weiterleitung, in einem "Service Control Point", SCP, konfiguriert, und Angerufener-Teilnehmer-Sofortweiterleitung, in einem "Home Location Register", HLR, konfiguriert, lauten;
wobei das Verbinden des Anrufs mit der Nummer mit einer höheren Priorität gemäß dem Bestimmungsergebnis Folgendes umfasst:
Abgeben einer "Connect"-Nachricht, falls bestimmt wird, dass die internationale Umleitungsnummer eine höhere Priorität aufweist, wobei die Zieladresse des Anrufs, die in der "Connect"-Nachricht geführt wird, zu der durch den angerufenen Teilnehmer vorkonfigurierten internationalen Umleitungsnummer geändert ist; und
direktes Abgeben einer "Continue"-Nachricht, falls bestimmt wird, dass die Sofortweiterleitungs-Umleitungsnummer eine höhere Priorität aufweist, und direktes Verbinden des Anrufs mit der durch den angerufenen Teilnehmer vorkonfigurierten Sofortweiterleitungs-Umleitungsnummer; wobei das Verfahren weiterhin Folgendes umfasst:
Erhalten, durch die Endstelle, einer Auslösebedingung des angerufenen Teilnehmers, und Senden der Auslöseanforderung an den SCP;
wobei das Erhalten der Auslösebedingung des angerufenen Teilnehmers Folgendes umfasst:
Anfordern, durch die Endstelle, von Teilnahmeinformationen des angerufenen Teilnehmers von dem HLR, wenn die Endstelle den Anruf von einem anrufenden Teilnehmer an den angerufenen Teilnehmer empfängt;
Bestimmen, durch das HLR, ob die Sofortweiterleitung durch den angerufenen Teilnehmer konfiguriert ist;
Senden der Teilnahmeinformationen des angerufenen Teilnehmers und einer Sofortweiterleitungsanzeige an die Endstelle, falls die Sofortweiterleitung konfiguriert ist; und
Senden der Teilnahmeinformationen des angerufenen Teilnehmers an die Endstelle, falls die Sofortweiterleitung nicht konfiguriert ist;
wobei das Senden der Auslöseanforderung an den SCP Folgendes umfasst:
Senden der Auslöseanforderung an den SCP, falls die Endstelle die durch das HLR gesendeten Teilnahmeinformationen des angerufenen Teilnehmers empfängt; und
Senden der die Sofortweiterleitungsanzeige enthaltenden Auslöseanforderung an den SCP, falls die Endstelle die Teilnahmeinformationen des angerufenen Teilnehmers und eine Sofortweiterleitungsanzeige, durch das HLR gesendet, empfängt.

2. System zum Weiterleiten eines Anrufs zu einer internationalen Umleitungsnummer, umfassend einen "Service Control Point", SCP, ein "Home Location Register", HLR, und einen "Service Switch Point", SSP, wobei
der SSP ausgelegt ist zum Anfordern von Teilnahmeinformationen eines angerufenen Teilnehmers von dem HLR, wenn ein Anruf von einem anrufenden Teilnehmer an den angerufenen Teilnehmer empfangen wird, und Erhalten der Teilnahmeinformationen des angerufenen Teilnehmers und Senden einer Auslöseanforderung an den SCP;
der HLR ausgelegt ist zum Bestimmen, ob die Sofortweiterleitung durch den angerufenen Teilnehmer konfiguriert ist, wenn die Anforderung für die Teilnahmeinformationen des angerufenen Teilnehmers von dem SSP empfangen werden, Senden der Teilnahmeinformationen des angerufenen Teilnehmers und der Sofortweiterleitungsanzeige an den SSP, falls die Sofortweiterleitung durch den angerufenen Teilnehmer konfiguriert ist, und Senden der Teilnahmeinformationen des angerufenen Teilnehmers an den SSP, falls die Sofortweiterleitung nicht durch den angerufenen Teilnehmer konfiguriert ist; und
der SCP ausgelegt ist zum Bestimmen, ob der internationale Umleitungsnummerdienst durch den angerufenen Teilnehmer aktiviert ist, nachdem die durch den SSP gesendete Auslöseanforderung empfangen ist, und Verbinden des Anrufs mit einer vorkonfigurierten internationalen Umleitungsnummer, falls der internationale Umleitungsnummerdienst aktiviert ist, wobei die internationale Nummer eine internationale Roaming-Funktion aufweist;
wobei der SSP weiterhin ausgelegt ist zum Erhalten einer durch den angerufenen Teilnehmer konfigurierten Sofortweiterleitungsanzeige, wenn Teilnahmeinformationen des angerufenen Teilnehmers erhalten werden, und Senden der Auslöseanforderung an den SCP, falls der SSP die durch das HLR gesendeten Teilnahmeinformationen des angerufenen Teilnehmers empfängt, und Senden der die Sofortweiterleitungsanzeige enthaltenden Auslöseanforderung an den SCP, falls der SSP die Teilnahmeinformationen des angerufenen Teilnehmers und eine Sofortweiterleitungsanzeige, durch das HLR gesendet, empfängt;
wobei der SCP weiterhin Folgendes umfasst:
eine Empfangseinheit, ausgelegt zum Empfangen der durch den SSP gesendeten Auslöseanforderung;
eine Weiterleitungsdienstbestimmungseinheit, ausgelegt zum Bestimmen, ob der angerufene Teilnehmer den internationalen Umleitungsnummerdienst aktiviert hat, gemäß der Auslöseanforderung, und Senden eines Bestimmungsergebnisses; und
eine Umleitungsnummerverbindungseinheit, ausgelegt zum Verbinden des Anrufs mit der vorkonfigurierten internationalen Umleitungsnummer, falls ein Bestimmungsergebnis, das anzeigt, dass der angerufene Teilnehmer den internationalen Umleitungsnummerdienst aktiviert hat, von der Weiterleitungsdienstbestimmungseinheit empfangen wird,
eine Sofortweiterleitungsdienstbestimmungseinheit, ausgelegt zum Bestimmen, ob der angerufene Teilnehmer einen Sofortumleitungsnummerdienst aktiviert hat, und Senden eines Bestimmungsergebnisses;
eine Sofortweiterleitungsnummererhaltungseinheit, ausgelegt zum Erhalten einer durch den angerufenen Teilnehmer vorkonfigurierten Sofortweiterleitungs-Umleitungsnummer von dem HLR, wenn von der Sofortweiterleitungsdienstbestimmungseinheit ein positives Bestimmungsergebnis empfangen wird;
eine Sofortweiterleitungsnummerverbindungseinheit, ausgelegt zum Verbinden des Anrufs mit der Sofortweiterleitungs-Umleitungsnummer in Übereinstimmung mit der erhaltenen Sofortweiterleitungs-Umleitungsnummer;
eine Prioritätsbestimmungseinheit, ausgelegt zum Bestimmen von Prioritäten der internationalen Umleitungsnummer und der Sofortweiterleitungs-Umleitungsnummer, nachdem die Sofortweiterleitungsnummererhaltungseinheit die Sofortweiterleitungs-Umleitungsnummer erhält, und Senden eines Bestimmungsergebnisses, das anzeigt, dass die internationale Umleitungsnummer eine höhere Priorität aufweist, an die Umleitungsnummerverbindungseinheit oder Senden eines Bestimmungsergebnisses, das anzeigt, dass die Sofortweiterleitungs-Umleitungsnummer eine höhere Priorität aufweist, an die Sofortweiterleitungsnummerverbindungseinheit; wobei die Prioritäten in dem SCP konfigurierte Angerufene-Teilnehmer-Weiterleitung und in dem HLR konfigurierte Angerufene-Teilnehmer-Sofortweiterleitung lauten;
die Sofortweiterleitungsnummerverbindungseinheit, weiterhin ausgelegt zum Verbinden des Anrufs mit der Sofortweiterleitungs-Umleitungsnummer, wenn das Bestimmungsergebnis, das anzeigt, dass die Sofortweiterleitungs-Umleitungsnummer eine höhere Priorität aufweist, von der Prioritätsbestimmungseinheit empfangen wird; und
die Umleitungsnummerverbindungseinheit, weiterhin ausgelegt zum Verbinden des Anrufs mit einer internationalen Umleitungsnummer, wenn das Bestimmungsergebnis, das anzeigt, dass die internationale Umleitungsnummer eine höhere Priorität aufweist, von der Prioritätsbestimmungseinheit empfangen wird, wobei die Zieladresse des Anrufs, die in der "Connect"-Nachricht geführt wird, zu der durch den angerufenen Benutzer vorkonfigurierten internationalen Umleitungsnummer geändert ist.

## Revendications

1. Procédé pour transférer un appel vers un numéro international, dans lequel le numéro international a une fonction d'itinérance internationale, comprenant les étapes suivantes :
recevoir une demande de déclenchement envoyée par un central de rattachement, dans lequel si la demande de déclenchement comprend une indication de transfert inconditionnel ;
connecter l'appel à un numéro international de réacheminement préconfiguré s'il est déterminé qu'un utilisateur appelé a activé un service de numéro international de réacheminement conformément à la demande de déclenchement ;
dans lequel l'étape consistant à connecter l'appel à un numéro international de réacheminement préconfiguré comprend les étapes suivantes :
déterminer si le service de numéro de transfert inconditionnel est activé par l'utilisateur appelé ;
obtenir un numéro de réacheminement de transfert inconditionnel préconfiguré par l'utilisateur appelé, si le service de numéro de transfert inconditionnel est activé ; et
déterminer des priorités du numéro international de réacheminement et du numéro de réacheminement de transfert inconditionnel et connecter l'appel au numéro ayant une priorité plus élevée suivant le résultat de détermination ; les priorités étant celles d'un transfert d'utilisateur appelé configurées dans un Point de Contrôle de Service, SCP,
et celles d'un transfert inconditionnel d'utilisateur appelé configurées dans un Enregistreur de Localisation Nominal, HLR ;
dans lequel l'étape consistant à connecter l'appel au numéro ayant une priorité plus élevée suivant le résultat de la détermination comprend les étapes suivantes :
émettre un message « Connecter » s'il est déterminé que le numéro international de réacheminement a une priorité plus élevée, l'adresse de Destination de l'appel acheminé dans le message « Connecter » étant changé en le numéro international de réacheminement préconfiguré par l'utilisateur appelé ; et
émettre un message « Continuer » directement s'il est déterminé que le numéro de réacheminement de transfert inconditionnel a une priorité plus élevée et connecter l'appel directement au numéro de réacheminement de transfert inconditionnel préconfiguré par l'utilisateur appelé ; le procédé comprenant en outre les étapes suivantes :
obtenir, par le central de rattachement, une condition de déclenchement de l'utilisateur appelé, et envoyer la demande de déclenchement au SCP ;
dans lequel l'étape consistant à obtenir la condition de déclenchement de l'utilisateur appelé comprend les étapes suivantes :
demander, par l'intermédiaire du central de rattachement, les informations de souscription de l'utilisateur appelé depuis le HLR, lorsque le central de rattachement reçoit l'appel d'un utilisateur appelant à destination de l'utilisateur appelé ;
déterminer, par l'intermédiaire du HLR, si le transfert inconditionnel est configuré par l'utilisateur appelé ;
envoyer les informations de souscription de l'utilisateur appelé et une indication de transfert inconditionnel au central de rattachement si le transfert inconditionnel est configuré ; et
envoyer les informations de souscription de l'utilisateur appelé au central de rattachement si le transfert inconditionnel n'est pas configuré ;
dans lequel l'étape consistant à envoyer la demande de déclenchement au SCP comprend les étapes suivantes :
envoyer la demande de déclenchement au SCP si le central de rattachement reçoit les informations de souscription de l'utilisateur appelé envoyées par le HLR ; et
envoyer la demande de déclenchement comprenant l'indication de transfert inconditionnel au SCP si le central de rattachement reçoit les informations de souscription de l'utilisateur appelé et l'indication de transfert inconditionnel envoyées par le HLR.

2. Système pour transférer un appel vers un numéro international de réacheminement comprenant un Point de Contrôle de Service, SCP, un Enregistreur de Localisation Nominal, HLR et un Point de Commutation de Service, SSP, dans lequel :
le SSP est conçu pour demander des informations de souscription d'un utilisateur appelé depuis le HLR, lorsqu'un appel d'un utilisateur appelant à destination de l'utilisateur appelé est reçu, et obtenir les informations de souscription de l'utilisateur appelé et envoyer une demande de déclenchement au SCP ;
le HLR est conçu pour déterminer si le transfert inconditionnel est configuré par l'utilisateur appelé lorsque la demande d'informations de souscription de l'utilisateur appelé depuis le SSP sont reçues, envoyer les informations de souscription de l'utilisateur appelé et l'indication de transfert inconditionnel au SSP si le transfert inconditionnel est configuré par l'utilisateur appelé, et envoyer les informations de souscription de l'utilisateur appelé au SSP si le transfert inconditionnel n'est pas configuré par l'utilisateur appelé ; et
le SCP est conçu pour déterminer si le service de numéro international de réacheminement est activé par l'utilisateur appelé après que la demande de déclenchement envoyée par le SSP a été reçue, et connecter l'appel à un numéro international de réacheminement préconfiguré si le service de numéro international de réacheminement est activé, le numéro international ayant une fonction d'itinérance internationale ;
le SSP étant en outre conçu pour obtenir une indication de transfert inconditionnel configurée par l'utilisateur appelé lors de l'obtention des informations de souscription de l'utilisateur appelé, et envoyer la demande de déclenchement au SCP si le SSP reçoit les informations de souscription de l'utilisateur appelé envoyées par le HLR, et envoyer la demande de déclenchement comprenant l'indication de transfert inconditionnel au SCP si le SSP reçoit les informations de souscription de l'utilisateur appelé et l'indication de transfert inconditionnel envoyées par le HLR ;
le SCP comprenant en outre :
une unité de réception, conçue pour recevoir la demande de déclenchement envoyée par le SSP ;
une unité de détermination de service de transfert, conçue pour déterminer si l'utilisateur appelé a activé le service de numéro international de réacheminement conformément à la demande de déclenchement et envoyer un résultat de détermination ; et
une unité de connexion de numéro de réacheminement, conçue pour connecter l'appel au numéro international de réacheminement préconfiguré si un résultat de détermination indiquant que l'utilisateur appelé a activé le service de numéro international de réacheminement est reçu de l'unité de détermination de service de transfert ;
une unité de détermination de service de transfert inconditionnel, conçue pour déterminer si l'utilisateur appelé a activé un service de numéro de réacheminement inconditionnel et envoyer un résultat de détermination ;
une unité d'obtention de numéro de transfert inconditionnel, conçue pour obtenir du HLR un numéro de réacheminement de transfert inconditionnel préconfiguré par l'utilisateur appelé lorsqu'un résultat de détermination positif est reçu de l'unité de détermination de service de transfert inconditionnel ;
une unité de connexion de numéro de transfert inconditionnel, conçue pour connecter l'appel au numéro de réacheminement de transfert inconditionnel conformément au numéro de réacheminement obtenu de transfert inconditionnel ;
une unité de détermination de priorité, conçue pour déterminer des priorités du numéro international de réacheminement et du numéro de réacheminement de transfert inconditionnel après que l'unité d'obtention de numéro de transfert inconditionnel a obtenu le numéro de réacheminement de transfert inconditionnel, et envoyer un résultat de détermination indiquant que le numéro international de réacheminement a une priorité plus élevée à l'unité de connexion de numéro de réacheminement ou envoyer un résultat de détermination indiquant que le numéro de réacheminement de transfert inconditionnel a une priorité plus élevée à l'unité de connexion de numéro de transfert inconditionnel ; les priorités étant celles d'un transfert d'utilisateur appelé configurées dans le SCP et celles d'un transfert inconditionnel d'utilisateur appelé configurées dans le HLR ;
l'unité de connexion de numéro de transfert inconditionnel, étant en outre conçue pour connecter l'appel au numéro de réacheminement de transfert inconditionnel lorsque le résultat de détermination indiquant que le numéro de réacheminement de transfert inconditionnel a une priorité plus élevée est reçu depuis l'unité de détermination de priorité ; et
l'unité de connexion de numéro de réacheminement, étant en outre conçue pour connecter l'appel à un numéro international de réacheminement lorsque le résultat de détermination indiquant que le numéro international de réacheminement a une priorité plus élevée est reçu depuis l'unité de détermination de priorité, l'adresse de Destination de l'appel acheminée dans le message « Connecter » étant changée en le numéro international de réacheminement préconfiguré par l'utilisateur appelé.
